# EUROPÄISCHE PATENTSCHRIFT

(11) **EP 3 286 958 B1**
(45) Veröffentlichungstag und Bekanntmachung des Hinweises auf die Patenterteilung: **23.10.2019**
(21) Anmeldenummer: 17728769.5
(22) Anmeldetag: 18.05.2017
(51) Int. Cl.: H04W 48/18, H04W 88/06

(54) **VERFAHREN UND VORRICHTUNG ZUR DATENÜBERTRAGUNG**
METHOD AND DEVICE FOR TRANSFERRING DATA
PROCÉDÉ ET DISPOSITIF DE TRANSFERT DE DONNÉES

(30) Priorität: 09.06.2016 DE 102016007004
(43) Veröffentlichungstag der Anmeldung: 28.02.2018
(73) Patentinhaber: Daimler AG, 70327 Stuttgart (DE)
(72) Erfinder: BREU, Jakob, 70190 Stuttgart (DE)
(74) Vertreter: JENSEN & SON
(86) Internationale Anmeldenummer: PCT/EP2017/000600
(87) Internationale Veröffentlichungsnummer: WO 2017/211441

(56) Entgegenhaltungen:
- EP-A1- 1 772 994
- DE-A1-102011 118 966
- FR-A1- 3 023 668
- US-A1- 2010 056 181
- US-A1- 2016 150 451

## Beschreibung

Die vorliegende Erfindung betrifft ein Verfahren zur Datenübertragung, bei welchem mittels einer Kommunikationseinrichtung in einem ersten Betriebsmodus Daten in einem nach einem ersten Standard ausgebildeten, ersten Funknetz ausgesendet und/oder empfangen werden und in einem zweiten Betriebsmodus Daten in einem nach einem zweiten Standard ausgebildeten, zweiten Funknetz ausgesendet und/oder empfangen werden, wobei mittels der Kommunikationseinrichtung erkannt wird, ob sich die Kommunikationseinrichtung innerhalb oder außerhalb eines Empfangsbereichs des ersten Funknetzes befindet. Darüber hinaus betrifft die vorliegende Erfindung eine Vorrichtung zur Datenübertragung.

Aus dem Stand der Technik sind Verfahren zur Datenübertragung bekannt, bei denen Daten in lokalen Funknetzen ausgesendet und/oder empfangen werden. Ein solches lokales Funknetz kann beispielsweise ein drahtloses lokales Netzwerk (WLAN - Wireless Local Area Network) sein. Insbesondere können solche drahtlosen lokalen Netzwerke nach dem Standard IEEE 802.11 ausgebildet sein, welcher wiederum unterschiedliche Normen umfasst. Dabei wird der Standard IEEE 802.11p für die ad-hoc-Kommunikation für Verkehrsteilnehmer verwendet. Diese Kommunikation beinhaltet den Datenaustausch zwischen Fahrzeugen bzw. Verkehrsteilnehmern, welche auch als Fahrzeug-zu-Fahrzeug-Kommunikation (Car-to-Car-Communication) bezeichnet wird. Ferner wird dieser Standard auch für die Kommunikation zwischen Fahrzeugen und Infrastruktureinrichtungen, welche auch als Fahrzeug-zu-Infrastruktur-Kommunikation (Car-to-Infrastructure-Communication) bezeichnet wird, verwendet. Bei dem Standard IEEE 802.11p findet die Kommunikation auf einem dezidierten Frequenzspektrum bei 5,9 GHz statt. Die herkömmliche WLAN-Kommunikation für Endverbraucher nach anderen IEEE 802.11-Standards verwendet andere Frequenzen und Kanalzugriffsverfahren.

Aus dem Stand der Technik sind ferner Kommunikationseinrichtungen bekannt, die in einem ersten Betriebsmodus Daten in einem ersten Funknetz aussenden und/oder empfangen, welches nach einem ersten Standard ausgebildet ist, und in einem zweiten Betriebsmodus Daten in einem Funknetz aussenden und/oder empfangen, welches nach einem zweiten Standard ausgebildet ist. Die Kommunikationseinrichtungen unterstützen den Betrieb in beiden Arten von Funknetzen aber nicht im Parallelbetrieb. Je nach Einsatz der Kommunikationseinrichtungen ist ein Betriebsmodus auszuwählen.

Hierzu beschreibt die DE 10 2008 037 880 A1 eine Vorrichtung zum Übertragen von Informationen in einer auf WLAN nach dem IEEE 802.11-Standard basierenden Fahrzeug-zu-Fahrzeug-Kommunikation bei der sowohl Sicherheitsinformationen nach dem IEEE 802.11p-Standard als auch nicht sicherheitsrelevante Informationen nach einem anderen IEEE 802.11-Standard übertragen werden. Die Vorrichtung weist einen WLAN-Chipsatz auf, welcher wiederum eine Sende- und/oder Empfangseinrichtung aufweist. Dabei ist es vorgesehen, dass der WLAN-Chipsatz mittels eines Steuerbefehls zwischen einem ersten Modus nach dem IEEE 802.11p-Standard und einem zweiten Modus nach einem anderen IEEE 802.11-Standard umschaltbar ist.

Darüber hinaus beschreibt die DE 10 2011 113 300 B3 eine Vermittlungseinrichtung zum Anschluss an eine Antenneneinheit und eine Recheneinheit zur Bildung einer Kommunikationseinrichtung im Rahmen der Kraftfahrzeug-zu-X-Kommunikation, wobei die Vermittlungseinrichtung wenigstens eine Schnittstelle zur Kommunikation mit einem die Recheneinheit umfassenden mobilen Endgerät, insbesondere einem Mobiltelefon, und eine Steuereinrichtung zur Weiterleitung wenigstens eines Teils empfangener Nachrichten an das mobile Endgerät und/oder zum Aussenden von Nachrichten aufgrund eines Steuerbefehls von dem mobilen Endgerät aufweist.

Des Weiteren beschreibt die US 2009/0278705 A1 ein Verfahren zum Bereitstellen eines WiFi-Zugangs für ein portables Gerät. Hierbei wird eine initiale Position des portablen Geräts bestimmt und an einen Standortanbieter übermittelt. Zudem werden Standorte und WiFi-Parameter für einen Satz von WiFi-Zugangspunkten von dem Standortanbieter empfangen, wobei der Satz von WiFi-Zugriffspunkten innerhalb eines Radius der initiale Position des tragbaren Geräts liegt. Außerdem wird überprüft, ob sich das portable Gerät in einem drahtlosen Bereich zumindest eines der WiFi-Zugriffspunkte befindet. Ferner kann ein Transceiver des portablen Geräts aktiviert werden, falls sich das portable Gerät in dem drahtlosen Bereich des zumindest einen der WiFi-Zugriffspunkte befindet. Dabei kann die Verbindung zwischen dem portablen Gerät und dem Standortbetreiber bzw. einer Basisstation über eine Mobilfunkverbindung erfolgen.

Ferner offenbart die DE 10 2011 118 966 A1 ein Kommunikationsgerät für einen Verkehrsteilnehmer, insbesondere für ein Fahrzeug oder einen Fußgänger, zur Vermeidung von Kollisionen zwischen dem Verkehrsteilnehmer und einem anderen Verkehrsteilnehmer, wobei das Kommunikationsgerät zum drahtlosen Aussenden und/oder Empfangen von Daten ausgebildet ist. Dabei kann das Kommunikationsgerät gemäß dem WLAN-Kommunikationsstandard kommunizieren.

Die US 2016/0150451 A1 beschreibt einen Datenrouter für ein mobiles drahtloses Netzwerk. Der Router ist dazu eingerichtet, ein Netzwerk von Fahrzeugen, welches mit einer Infrastruktur verbunden ist, bereitzustellen, um die Fahrzeuge mit dem Internet zu verbinden. Beispielsweise kann mit dem Router ein WiFi-Signal von einem festen Hotspot auf eine Mehrzahl von geparkten Fahrzeugen umverteilt werden. Ferner ist der Router dazu eingerichtet, die Fahrzeuge untereinander zu verbinden. Für die Datenübertragung kann der IEEE 802.11a/b/g/n-Standard oder der IEEE 802.11p-Standard verwendet werden.

Es ist Aufgabe der vorliegenden Erfindung, eine Lösung aufzuzeigen, wie eine Kommunikationseinrichtung, welche in zwei verschiedenen Funknetzen betreibbar ist, effizienter genutzt werden kann.

Diese Aufgabe wird erfindungsgemäß durch ein Verfahren sowie durch eine Vorrichtung mit den Merkmalen gemäß den jeweiligen unabhängigen Patentansprüchen gelöst. Vorteilhafte Weiterbildungen der vorliegenden Erfindung sind Gegenstand der abhängigen Patentansprüche.

Ein erfindungsgemäßes Verfahren dient zur Datenübertragung. Hierbei werden mittels einer Kommunikationseinrichtung in einem ersten Betriebsmodus Daten in einem nach einem ersten Standard ausgebildeten, ersten Funknetz ausgesendet und/oder empfangen und in einem zweiten Betriebsmodus werden Daten in einem nach einem zweiten Standard ausgebildeten, zweiten Funknetz ausgesendet und/oder empfangen, wobei mittels der Kommunikationseinrichtung erkannt wird, ob sich die Kommunikationseinrichtung innerhalb oder außerhalb eines Empfangsbereichs des ersten Funknetzes befindet. Dabei wird die Kommunikationseinrichtung in dem ersten Betriebsmodus betrieben, falls sich die Kommunikationseinrichtung innerhalb des Empfangsbereichs des ersten Funknetzes befindet, und die Kommunikationseinrichtung wird in dem zweiten Betriebsmodus betrieben, falls sich die Kommunikationseinrichtung außerhalb des Empfangsbereichs des ersten Funknetzes befindet. Dabei ist der zweite Standard ein IEEE 802.11p-Standard und der erste Standard ist ein von dem IEEE 802.11p-Standard verschiedener Standard der Norm IEEE 802.11. Zudem nimmt die Kommunikationseinrichtung in dem zweiten Betriebsmodus an einer ad-hoc-Kommunikation teil.

Das Verfahren kann mit einer entsprechenden Vorrichtung, insbesondere einem mobilen Endgerät, durchgeführt werden. Diese Vorrichtung kann eine Kommunikationseinrichtung aufweisen, die beispielsweise durch einen Kommunikationschip bzw. einen WLAN-Chipsatz gebildet ist. Diese Kommunikationseinrichtung kann in dem ersten Betriebsmodus Daten in dem ersten Funknetz aussenden und/oder empfangen. In dem zweiten Betriebsmodus kann die Kommunikationseinrichtung Daten in einem vom ersten Funknetz verschiedenen, zweiten Funknetz aussenden und/oder empfangen. Bei dem ersten Funknetz und dem zweiten Funknetz handelt es sich insbesondere jeweils um ein drahtloses lokales Netzwerk, welches auch als WLAN bezeichnet werden kann. Die Kommunikationseinrichtung ist ferner dazu ausgebildet, dass diese erkennen kann, ob sich die Kommunikationseinrichtung innerhalb oder außerhalb des Empfangsbereichs des ersten Funknetzes befindet. Das erste Funknetz kann beispielsweise einen drahtlosen Router oder einen sogenannten Wireless Access Point umfassen, durch welchen der Empfangsbereich des ersten Funknetzes definiert wird. Dieser Router kann in vorbestimmten Zeitintervallen entsprechende Datenpakete aussenden, welche den Namen des ersten Funknetzes beschreiben. Diese Datenpakete können auch als Service Set Identifier (SSID) bezeichnet werden. Wenn von der Kommunikationseinrichtung diese Datenpakete empfangen werden, befindet sich die Kommunikationseinrichtung in dem Empfangsbereich des ersten Funknetzes.

Gemäß einem wesentlichen Aspekt der Erfindung wird die Kommunikationseinrichtung in dem ersten Betriebsmodus betrieben, falls sich die Kommunikationseinrichtung innerhalb des Empfangsbereichs des ersten Funknetzes befindet und die Kommunikationseinrichtung wird in dem zweiten Betriebsmodus betrieben, falls sich die Kommunikationseinrichtung außerhalb des Empfangsbereichs des ersten Funknetzes befindet. Wenn sich die Kommunikationseinrichtung innerhalb des Empfangsbereichs des ersten Funknetzes befindet, können mit der Kommunikationseinrichtung die Daten in dem ersten Funknetz ausgesendet und/oder empfangen werden. Sobald sich also die Kommunikationseinrichtung in dem Empfangsbereich des ersten Funknetzes befindet, kann die Kommunikationseinrichtung in dem ersten Betriebsmodus betrieben werden. Falls sich die Kommunikationseinrichtung aber außerhalb des Empfangsbereichs des ersten Funknetzes befindet, kann die Kommunikationseinrichtung in dem zweiten Betriebsmodus betrieben werden und Daten in dem zweiten Funknetz aussenden und/oder empfangen. In dem zweiten Betriebsmodus nimmt die Kommunikationseinrichtung an einer ad-hoc-Kommunikation teil. Somit kann die Kommunikationseinrichtung zum Datenaustausch auch dann genutzt werden, wenn sich diese außerhalb des Empfangsbereichs des ersten Funknetzes befindet. Dies ermöglicht insgesamt einen effizienteren Betrieb der Kommunikationseinrichtung.

Zudem ist der zweite Standard ein IEEE 802.11p-Standard und der erste Standard ist ein von dem IEEE 802.11p-Standard verschiedener Standard der Norm IEEE 802.11. Das erste Funknetz kann beispielsweise nach dem IEEE 802.11a-Standard, dem IEEE 802.11b-Standard, dem IEEE 802.11c-Standard, dem IEEE 802.11d-Standard, dem IEEE 802.11e-Standard, dem IEEE 802.11f-Standard, dem IEEE 802.11g-Standard, dem IEEE 802.11h-Standard, dem IEEE 802.11i-Standard, dem IEEE 802.11j-Standard, dem IEEE 802.11n-Standard, dem IEEE 802.11ac-Standard, dem IEEE 802.11ad-Standard oder dem IEEE 802.11ah-Standard ausgebildet sein. In dem ersten Funknetz können beispielsweise die Daten in einem Frequenzband von 2, 4 GHz oder in einem Frequenzband zwischen 5,1 und 5,8 GHz übertragen werden. In dem zweiten Funknetz können die Daten in einem Frequenzband von 5,9 GHz übertragen werden. Mit anderen Worten stellt das erste Funknetz ein üblicherweise verwendetes WLAN dar. Dieses erste Funknetz kann beispielsweise an einem Wohnsitz, an welchem ein WLAN Access Point vorhanden ist, genutzt werden. Ebenso kann das erste Funknetz beispielsweise an einem Arbeitsplatz eines Nutzers der Vorrichtung bzw. des mobilen Endgeräts genutzt werden, an welchem dem Nutzer als Arbeitgeber beispielsweise ein kostenloser Internetzugang über WLAN zur Verfügung gestellt wird. Ferner kann das erste Funknetz an sogenannten Hotspots, welche beispielsweise von Cafes oder Geschäften zur Verfügung gestellt werden, genutzt werden. Die Kommunikationseinrichtung kann also in verschiedenen ersten Funknetzen verwendet werden. Außerhalb dieser WLAN-Zugangspunkte bzw. außerhalb des Empfangsbereichs des ersten Funknetzes wird dann das zweite Funknetz verwendet, welches nach dem Standard IEEE 802.11p betrieben wird. In diesem zweiten Funknetz können dann mit dem mobilen Endgerät ebenfalls Daten ausgesendet und/oder empfangen werden.

Gemäß einer weiteren Ausführungsform wird eine Position der Kommunikationseinrichtung bestimmt und die bestimmte Position in einer Speichereinrichtung gespeichert, falls sich die Kommunikationseinrichtung in dem Empfangsbereich des ersten Funknetzes befindet. Die Vorrichtung bzw. das mobile Endgerät kann beispielsweise eine Positionsbestimmungseinrichtung aufweisen, mittels welcher die aktuelle Position des mobilen Endgeräts und damit auch der Kommunikationseinrichtung bestimmt werden kann. Beispielsweise kann die aktuelle Position mittels der Positionsbestimmungseinrichtung auf Grundlage eines satellitengestützten Positionsbestimmungssystems bestimmt werden. Ferner kann die aktuelle Position der Kommunikationseinrichtung über eine entsprechende Ortung in einem Mobilfunknetz erfolgen. Wenn erkannt wird, dass sich die Kommunikationseinrichtung in dem Erfassungsbereich des ersten Funknetzes befindet bzw. wenn sich die Kommunikationseinrichtung in das erste Funknetz einwählt, kann die aktuelle Position des mobilen Endgeräts bzw. der Kommunikationseinrichtung in einer Speichereinrichtung gespeichert werden. In der Speichereinrichtung können insbesondere Positionswerte gespeichert werden, welche die aktuelle Position beschreiben. In der Speichereinrichtung können somit die jeweiligen Positionswerte gespeichert werden, bei denen sich die Kommunikationseinrichtung in dem Empfangsbereich des ersten Funknetzes befindet. Dieser Datensatz kann im Hintergrund automatisch verwaltet und aktualisiert werden. Somit kann das mobile Endgerät quasi die Gegenden, in denen das erste Funknetz verfügbar ist, lernen.

Gemäß einer weiteren Ausführungsform wird eine aktuelle Position der Kommunikationseinrichtung mit in der Speichereinrichtung gespeicherten Positionen verglichen und die Kommunikationseinrichtung in dem zweiten Betriebsmodus betrieben, falls sich die aktuelle Position von den gespeicherten Positionen unterscheidet. Insbesondere wird die Kommunikationseinrichtung in dem zweiten Betriebsmodus betrieben, falls sich die aktuelle Position von allen in der Speichereinrichtung gespeicherten Positionen unterscheidet. Wenn sich die Kommunikationseinrichtung also außerhalb des Empfangsbereichs des ersten Funknetzes befindet, wird die Kommunikationseinrichtung automatisch in den zweiten Betriebsmodus geschaltet. Umgekehrt, sobald sich das mobile Endgerät bzw. die Kommunikationseinrichtung innerhalb des Empfangsbereichs des ersten Funknetzes bzw. innerhalb einer bekannten WLAN-Umgebung befindet, schaltet die Kommunikationseinrichtung automatisch in den ersten Betriebsmodus. Dies führt dazu, dass mit dem mobilen Endgerät der WLAN-Zugang genutzt werden kann, falls sich die Kommunikationseinrichtung in dem Empfangsbereich eines bekannten ersten Funknetzes befindet, für welches sich ein Nutzer des mobilen Endgeräts beispielsweise angemeldet hat. Außerhalb der Empfangsbereiche des ersten Funknetzes in denen die Kommunikationseinrichtung ansonsten üblicherweise in einem Ruhezustand bzw. in einem Standby-Modus wäre, kann das mobile Endgerät dazu genutzt werden, mit Fahrzeugen bzw. Verkehrsteilnehmern oder Infrastruktureinrichtungen zu kommunizieren.

Zudem werden in dem zweiten Betriebsmodus die Daten von der Kommunikationseinrichtung an eine weitere Kommunikationseinrichtung eines weiteren Verkehrsteilnehmers und/oder an eine weitere Kommunikationseinrichtung einer Infrastruktureinrichtung gesendet. Wenn die Kommunikationseinrichtung in dem zweiten Betriebsmodus betrieben wird, kann die Kommunikationseinrichtung Daten an eine Kommunikationseinrichtung eines weiteren Verkehrsteilnehmers, beispielsweise an ein Fahrzeug, aussenden. Ferner können mit der Kommunikationseinrichtung Daten an eine Kommunikationseinrichtung einer Infrastruktureinrichtung ausgesendet werden. Eine solche Infrastruktureinrichtung kann beispielsweise eine Lichtsignalanlage oder eine Verkehrsleitzentrale sein. Die Kommunikationseinrichtung kann in dem zweiten Funknetz also als Sender verwendet werden. Dies ermöglicht es, dass andere Verkehrsteilnehmer und Infrastruktureinrichtungen Informationen von der Kommunikationseinrichtung bzw. dem mobilen Endgerät empfangen, wenn sich dieses in dem zweiten Betriebsmodus befindet. Bei den empfangenen Daten kann es sich beispielsweise um sicherheitsrelevante Daten oder Verkehrsinformationen handeln.

Ferner werden mittels der Kommunikationseinrichtung Daten, welche eine aktuelle Position der Kommunikationseinrichtung und/oder eine aktuelle Bewegung der Kommunikationseinrichtung und/oder einen aktuellen Zeitpunkt beschreiben, an die weitere Kommunikationseinrichtung des Verkehrsteilnehmers und/oder die weitere Kommunikationseinrichtung der Infrastruktureinrichtung gesendet. Die Daten, die mit dem mobilen Endgerät bzw. der Kommunikationseinrichtung ausgesendet werden, können die aktuelle Position des mobilen Endgeräts bzw. der Kommunikationseinrichtung beschreiben. Die aktuelle Position der Kommunikationseinrichtung kann - wie zuvor erläutert - mithilfe der Positionsbestimmungseinrichtung des mobilen Endgeräts bestimmt werden. Somit liegt dem zumindest einen weiteren Verkehrsteilnehmer und/oder der Infrastruktureinrichtung eine Information vor, wo sich das mobile Endgerät aktuell befindet. Ferner können die Daten, welche von der Kommunikationseinrichtung in dem zweiten Betriebsmodus ausgesendet werden, eine aktuelle Bewegung der Kommunikationseinrichtung bzw. des mobilen Endgeräts beschreiben. Damit liegt den weiteren Verkehrsteilnehmern und/oder der Infrastruktureinrichtung eine Information über die aktuelle Bewegungsrichtung vor. Die Daten können auch eine aktuelle Geschwindigkeit und/oder Beschleunigung der Kommunikationseinrichtung beschreiben. Die Daten, die mit der Kommunikationseinrichtung in dem zweiten Betriebsmodus ausgesendet werden, können ebenfalls einen aktuellen Zeitpunkt beschreiben. Mit anderen Worten können die Daten einen entsprechenden Zeitstempel umfassen. Somit kann auf Grundlage der Daten bestimmt werden, wann sich das mobile Endgerät an welcher Position befunden hat. Wenn es sich bei dem Verkehrsteilnehmer um ein Fahrzeug handelt, kann beispielsweise ein Fahrerassistenzsystem des Fahrzeugs auf Grundlage der Daten, die mit dem mobilen Endgerät ausgesendet werden, bestimmen, ob sich das mobile Endgerät bzw. ein Nutzer der das mobile Endgerät trägt, auf einer Fahrbahn befindet und somit gegebenenfalls eine Kollision drohen könnte. Damit besteht die Möglichkeit, dass das Fahrerassistenzsystem des Fahrzeugs entsprechende kollisionsvermeidende Maßnahmen einleitet. Somit kann die Sicherheit im Straßenverkehr auch für Nutzer des mobilen Endgeräts gesteigert werden.

Alternativ oder zusätzlich werden in dem zweiten Betriebsmodus die Daten mittels der Kommunikationseinrichtung von der weiteren Kommunikationseinrichtung des Verkehrsteilnehmers und/oder der Infrastruktureinrichtung empfangen. Mit anderen Worten kann die Kommunikationseinrichtung des mobilen Endgeräts in dem zweiten Betriebsmodus als Empfänger betrieben werden und Daten von weiteren Verkehrsteilnehmern oder Infrastruktureinrichtungen empfangen. Auf diese Weise stehen einem Nutzer des mobilen Endgeräts Daten zur Verfügung, die ansonsten nur über Fahrzeug-zu-Fahrzeug-Kommunikation oder über Fahrzeug-zu-Infrastruktur-Kommunikation übertragen werden. Damit kann der Nutzer des mobilen Endgeräts Daten empfangen, welche beispielsweise auf mögliche Gefahren in dem Straßenverkehr hinweisen. Ferner stehen dem Nutzer des mobilen Endgeräts Daten zur Verfügung, welche die aktuelle Verkehrssituation oder Witterungsverhältnisse in der Umgebung beschreiben. Somit können auch Nutzer des mobilen Endgeräts, die am Straßenverkehr als Fußgänger, Fahrradfahrer, Motorradfahrer oder dergleichen, teilnehmen die Vorteile der Fahrzeug-zu-Fahrzeug Kommunikation und der Fahrzeug-zu-Infrastruktur-Kommunikation nutzen.

Des Weiteren werden von der weiteren Kommunikationseinrichtung des Verkehrsteilnehmers ausgesendete Daten, welche einen Betriebszustand des weiteren Verkehrsteilnehmers beschreiben, und/oder von der weiteren Kommunikationseinrichtung der Infrastruktureinrichtung ausgesendete Daten, welche einen Betriebszustand der Infrastruktureinrichtung beschreiben, mittels der Kommunikationseinrichtung empfangen. Wie bereits erläutert, kann es sich bei dem weiteren Verkehrsteilnehmer um ein Fahrzeug, insbesondere ein Kraftfahrzeug, handeln. Die Daten, die von dem Verkehrsteilnehmer mit seiner weiteren Kommunikationseinrichtung ausgesendet werden, können als den Betriebszustand die aktuelle Position, die aktuelle Geschwindigkeit, die aktuelle Längsbeschleunigung, die aktuelle Querbeschleunigung, eine aktuelle Drehrate und/oder einen aktuellen Lenkwinkel beschreiben. Darüber hinaus können die Daten als den Betriebszustand Informationen zu einem Fahrerassistenzsystem des Verkehrsteilnehmers bzw. des Fahrzeugs beschreiben. Beispielsweise können die Daten beschreiben, dass ein Fahrerassistenzsystem des weiteren Verkehrsteilnehmers ausgelöst bzw. aktiviert wurde. Ein solches Fahrerassistenzsystem kann beispielsweise ein Antiblockiersystem, ein Notbremsassistent oder dergleichen sein. Damit kann der Nutzer des mobilen Endgeräts auf mögliche Gefahrensituationen hingewiesen werden. Darüber hinaus kann es vorgesehen sein, dass die Daten, die von dem Verkehrsteilnehmer bereitgestellt werden, Informationen zu einer Verkehrssituation in der Umgebung des Verkehrsteilnehmers beschreiben. Die Daten können beispielsweise Informationen zu Verkehrsstaus, liegengebliebenen Fahrzeugen, Baustellen, einem Einsatz von Rettungsfahrzeugen oder dergleichen umfassen. Ferner kann es vorgesehen sein, dass die Daten, die von dem weiteren Verkehrsteilnehmer ausgesendet werden, Informationen zu Witterungsbedingungen in der Umgebung des weiteren Verkehrsteilnehmers beschreiben. In diesem Fall können die Daten beispielsweise beschreiben, ob es in der Umgebung des Verkehrsteilnehmers regnet, schneit, ob Aquaplaning droht und/oder Glatteis vorhanden ist.

Zusätzlich kann die Kommunikationseinrichtung des mobilen Endgeräts Daten von einer Infrastruktureinrichtung empfangen. Bei der Infrastruktureinrichtung kann es sich beispielsweise um eine Lichtsignalanlage, insbesondere eine Ampel, handeln. In diesem Fall können die Daten als den Betriebszustand beschreiben, wie lange eine Rotphase der Ampel noch andauert. Ferner kann es sich bei der Infrastruktureinrichtung beispielsweise um ein Verkehrsleitsystem handeln, welches als die Daten Informationen zu der aktuellen Verkehrssituation und/oder den Witterungsbedingungen bereitstellt. Durch den Empfang der Daten wird es dem Nutzer des mobilen Endgeräts ermöglicht, einerseits die Sicherheit im Straßenverkehr zu erhöhen und andererseits die Verkehrseffizienz der Bewegung im Straßenverkehr zu verbessern.

Weiterhin ist es vorteilhaft, wenn in Abhängigkeit von den in dem zweiten Betriebsmodus empfangenen Daten eine Ausgabe und/oder Warnung ausgegeben wird. Die Vorrichtung bzw. das mobile Endgerät kann eine entsprechende Ausgabeeinrichtung umfassen, mit der eine Ausgabe und/oder eine Warnung ausgegeben werden kann. Beispielsweise kann eine optische, eine akustische und/oder haptische Warnung ausgegeben werden. Mithilfe der Recheneinrichtung des mobilen Endgeräts kann auf Grundlage der empfangenen Daten die Ausgabeeinrichtung so angesteuert werden, dass dem Nutzer des mobilen Endgeräts Informationen zu den Daten oder entsprechende Warnungen ausgegeben werden.

Eine erfindungsgemäße Vorrichtung zur Datenübertragung ist insbesondere als mobiles Endgerät ausgebildet. Bei der Vorrichtung kann es sich beispielsweise um ein Smartphone, einen tragbaren Computer oder ein Tablet handeln. Die Vorrichtung umfasst eine Kommunikationseinrichtung, welche dazu ausgelegt ist, in einem ersten Betriebsmodus Daten in einem nach einem ersten Standard ausgebildeten, ersten Funknetz zu senden und/oder zu empfangen und in einem zweiten Betriebsmodus Daten in einem nach einem zweiten Standard ausgebildeten, zweiten Funknetz zu senden und/oder zu empfangen, wobei die Vorrichtung dazu ausgelegt ist, zu erkennen, ob sich die Kommunikationseinrichtung innerhalb oder außerhalb eines Empfangsbereichs des ersten Funknetzes befindet. Darüber hinaus umfasst die Vorrichtung eine Recheneinrichtung zum Einstellen des Betriebsmodus der Kommunikationseinrichtung. Dabei ist die Recheneinrichtung dazu ausgelegt, die Kommunikationsrichtung in dem ersten Betriebsmodus zu betreiben, falls sich die Kommunikationseinrichtung innerhalb des Empfangsbereichs des ersten Funknetzes befindet, und die Kommunikationseinrichtung in dem zweiten Betriebsmodus zu betreiben, falls sich die Kommunikationseinrichtung außerhalb des Empfangsbereichs des ersten Funknetzes befindet. Dabei ist der zweite Standard ein IEEE 802.11p-Standard und der erste Standard ist ein von dem IEEE 802.11p-Standard verschiedener Standard der Norm IEEE 802.11. Zudem ist die Kommunikationseinrichtung dazu ausgelegt, in dem zweiten Betriebsmodus an einer ad-hoc-Kommunikation teilzunehmen.

Bei der Recheneinrichtung kann es sich beispielsweise um einem programmierbaren Rechner, wie einen digitalen Signalprozessor, einen Mikrocontroller oder dergleichen handeln. Bei der Kommunikationseinrichtung kann es sich um einen entsprechenden WLAN-Chip handeln, der sowohl in dem ersten Betriebsmodus als auch in dem zweiten Betriebsmodus betrieben werden kann. Darüber hinaus kann die Vorrichtung eine Speichereinrichtung aufweisen, die beispielsweise als RAM, als ROM oder als Flash-Speicher ausgebildet sein kann. Ferner kann die Vorrichtung eine Positionsbestimmungseinrichtung zum Bestimmen der Position der Vorrichtung bzw. der Kommunikationseinrichtung umfassen.

Somit können auch Nutzer der Vorrichtung, welche am Straßenverkehr teilnehmen, die Fahrzeug-zu-Fahrzeug Kommunikation und/oder die Fahrzeug-zu-Infrastruktur-Kommunikation nutzen. Dies eignet sich insbesondere für Fußgänger, Fahrradfahrer oder Fahrer von Krafträdern. Ferner kann es vorgesehen sein, dass die Vorrichtung bzw. das mobile Endgerät in einem Kraftfahrzeug, insbesondere einem Personenkraftwagen, verwendet wird. Damit können Informationen zu verkehrsrelevanten Daten auch in einem Fahrzeug zu Verfügung gestellt werden, welches selbst keine Kommunikationseinrichtung für die Fahrzeug-zu-Fahrzeug Kommunikation und/oder die Fahrzeug-zu-Infrastruktur-Kommunikation aufweist. Dabei kann berücksichtigt werden, dass die Sende- und/oder Empfangsreichweite der Vorrichtung begrenzt sein kann, wenn sich die Vorrichtung innerhalb des Kraftfahrzeugs befindet.

Ein weiterer Aspekt der Erfindung betrifft ein Computerprogramm, welches beispielsweise auf der Speichereinrichtung der Vorrichtung abgelegt ist. Dabei ist das Computerprogramm zum Ausführen eines erfindungsgemäßen Verfahrens oder vorteilhaften Ausführungsformen des Verfahrens programmiert, wenn es auf der Recheneinrichtung ausgeführt wird. Somit kann beispielsweise ein Smartphone oder ein Tablet, auf welchem das Computerprogramm vorhanden ist, das erfindungsgemäße Verfahren durchführen. Damit kann das Verfahren auf einem bekannten mobilen Endgerät durch einen Software-Update ermöglicht werden. Dabei kann es auch vorgesehen sein, dass das Computerprogramm als Applikation bereitgestellt wird.

Die mit Bezug auf das erfindungsgemäße Verfahren vorgestellten bevorzugten Ausführungsformen und deren Vorteile gelten entsprechend für die erfindungsgemäße Vorrichtung und das erfindungsgemäße Computerprogramm.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine Vorrichtung zur Datenübertragung in einer schematischen Darstellung;
- Fig. 2: ein schematisches Ablaufdiagramm eines Verfahrens zur Datenübertragung;
- Fig. 3: einen Nutzer mit der Vorrichtung, wobei die Vorrichtung mit einer Infrastruktureinrichtung kommuniziert; und
- Fig. 4: einen Nutzer mit der Vorrichtung, wobei die Vorrichtung mit einem Fahrzeug kommuniziert.

In den Figuren werden gleiche und funktionsgleiche Elemente mit den gleichen Bezugszeichen versehen.

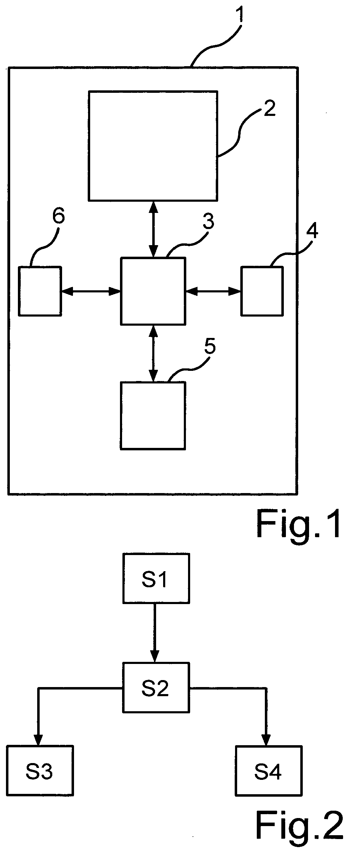

Fig. 1 zeigt eine Vorrichtung 1 in einer schematischen Darstellung. Bei der Vorrichtung 1 kann es sich insbesondere um ein mobiles Endgerät handeln, welches beispielsweise als Mobiltelefon, als Smartphone, als Tablet oder als tragbarer Computer ausgebildet sein kann. Die Vorrichtung 1 umfasst eine Kommunikationseinrichtung 2, welche beispielsweise durch einen WLAN-Kommunikationschip bereitgestellt werden kann. Die Kommunikationseinrichtung 2 kann in einem ersten und in einem zweiten Betriebsmodus betrieben werden. In dem ersten Betriebsmodus kann die Kommunikationseinrichtung 2 Daten in einem ersten Funknetz senden und/oder empfangen. In dem zweiten Betriebsmodus kann die Kommunikationseinrichtung 2 Daten in einem zweiten Funknetz senden und/oder empfangen.

Dabei ist das zweite Funknetz gemäß einem zweiten Standard, nämlich dem IEEE 802.11p-Standard, ausgebildet. Das erste Funknetz ist nach einem ersten Standard ausgebildet, welcher ein von dem IEEE 802.11p-Standard verschiedener Standard der Norm IEEE 802.11 ist. In dem ersten Betriebsmodus kann die Kommunikationseinrichtung 2 also in üblicherweise verwendeten lokalen Datennetzen bzw. WLAN-Netzen Daten aussenden und/oder empfangen. Diese ersten Funknetze können beispielsweise einem Nutzer 7 der Vorrichtung 1 an seinem Wohnort, an seinem Arbeitsplatz oder sogenannten Hotspots bereitgestellt werden. In dem zweiten Betriebsmodus kann die Kommunikationseinrichtung 2 - wie nachfolgend näher erläutert - Daten von einem Verkehrsteilnehmer 9 oder einer Infrastruktureinrichtung 8 empfangen.

Die Vorrichtung 1 umfasst ferner eine Recheneinrichtung 3, welche beispielsweise durch einen digitalen Signalprozessor, einen Mikroprozessor oder dergleichen bereitgestellt werden kann. Mithilfe der Recheneinrichtung 3 kann die Kommunikationseinrichtung 2 angesteuert werden und somit in dem ersten Betriebsmodus oder dem zweiten Betriebsmodus betrieben werden. Mithilfe der Recheneinrichtung 3 kann also der Betriebsmodus der Kommunikationseinrichtung 2 eingestellt werden. Des Weiteren umfasst die Vorrichtung 1 eine Positionsbestimmungseinrichtung 4, mittels welcher die aktuelle Position der Vorrichtung 1 bzw. der Kommunikationseinrichtung 2 bestimmt werden kann. Bei der Positionsbestimmungseinrichtung 4 kann es sich beispielsweise um einen Empfänger für ein satellitengestütztes Positionsbestimmungssystem handeln. Des Weiteren umfasst die Vorrichtung 1 eine Speichereinrichtung 5, auf welcher Daten oder Programme abgelegt werden können. Schließlich umfasst die Vorrichtung 1 eine Ausgabeeinrichtung 6, mittels welcher an den Nutzer 7 eine Ausgabe ausgegeben werden kann.

Fig. 2 zeigt ein schematisches Ablaufdiagramm eines Verfahrens zur Datenübertragung, welches mit der Vorrichtung 1 durchgeführt wird. Um das Verfahren durchzuführen, kann beispielsweise auf der Speichereinrichtung 5 ein entsprechendes Computerprogramm hinterlegt sein, welches auf der Recheneinrichtung 3 zum Ablauf gebracht wird. In einem Schritt S1 wird das Verfahren gestartet. In einem Schritt S2 wird überprüft, ob sich die Kommunikationseinrichtung 2 bzw. die Vorrichtung 1 in einem Empfangsbereich des ersten Funknetzes befindet. Hierzu können beispielsweise mit der Kommunikationseinrichtung 2 entsprechende Datenpakete empfangen werden, die von einem Accesspoint des ersten Funknetzes ausgesendet werden.

Falls sich die Kommunikationseinrichtung 2 bzw. die Vorrichtung 1 in dem ersten Funknetz befindet, wird das Verfahren einem Schritt S3 fortgesetzt. Dabei wird die Kommunikationseinrichtung 2 in dem ersten Betriebsmodus betrieben. Zu diesem Zweck wird die Kommunikationseinrichtung 2 mittels der Recheneinrichtung 3 entsprechend angesteuert und so in dem ersten Betriebsmodus überführt. Zudem kann mit der Positionsbestimmungseinrichtung 4 die aktuelle Position der Vorrichtung 1 bzw. der Kommunikationseinrichtung 2 bestimmt werden. Die aktuelle Position wird mit der Positionsbestimmungseinrichtung 4 bestimmt und an die Recheneinrichtung 3 übertragen. Die Recheneinrichtung 3 kann dann einen entsprechenden Wert, der die aktuelle Position der Vorrichtung 1 beschreibt, auf der Speichereinrichtung 5 hinterlegen. Somit kann zu einem späteren Zeitpunkt die aktuelle Position, die mit der Positionserfassungseinrichtung 4 bestimmt wird, mit Positionen verglichen werden, die in der Speichereinrichtung 5 hinterlegt sind. Da die in der Speichereinrichtung 5 hinterlegen Positionen nur solche Positionen beschreiben, die sich in einem Empfangsbereich eines ersten Funknetzes befinden, kann somit auf einfache Weise ermittelt werden, ob sich die Vorrichtung 1 in einem Empfangsbereich eines bekannten ersten Funknetzes befindet.

Falls die Überprüfung in dem Schritt S2 ergibt, dass sich die Vorrichtung 1 außerhalb des Empfangsbereichs eines ersten Funknetzes befindet, wird das Verfahren einem Schritt S4 fortgeführt. Hierbei wird die Kommunikationseinrichtung 2 in dem zweiten Betriebsmodus betrieben. Die Kommunikationseinrichtung 2 kann eine ad-hoc-Kommunikation mit Verkehrsteilnehmern 9 und/oder Infrastruktureinrichtungen 8 aufbauen und mit diesen über den IEEE 802.11p-Standard kommunizieren. In dem zweiten Betriebsmodus kann die Vorrichtung 1 bzw. die Kommunikationseinrichtung 2 Daten an Verkehrsteilnehmer 9 oder Infrastruktureinrichtungen 8 aussenden. Diese Daten können beispielsweise die aktuelle Position der Vorrichtung 1, eine aktuelle Geschwindigkeit der Vorrichtung 1 und/oder einen aktuellen Zeitpunkt bzw. einen Zeitstempel umfassen. Zudem kann die Kommunikationseinrichtung 2 in dem zweiten Betriebsmodus Daten von weiteren Verkehrsteilnehmern 9 oder Infrastruktureinrichtungen 8 empfangen. Auf Grundlage dieser empfangenen Daten kann einem Nutzer 7 der Vorrichtung 1 mithilfe der Ausgabeeinrichtung 6 eine entsprechende Ausgabe oder eine Warnung bereitgestellt werden.

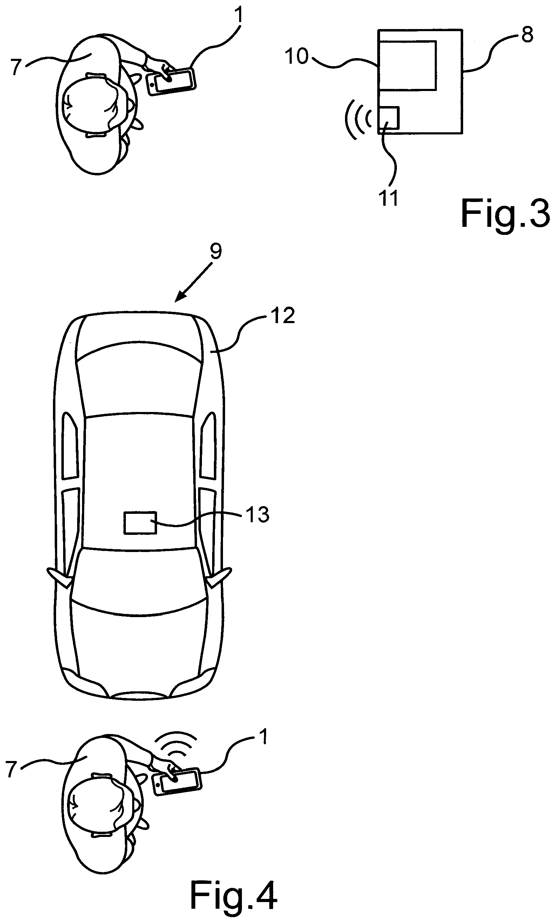

Wenn sich der Nutzer 7 der Vorrichtung 1 bzw. des mobilen Endgeräts im Straßenverkehr befindet, ist die Vorrichtung 1 üblicherweise außerhalb des Empfangsbereichs des ersten Funknetzes. In dieser Situation wird nun die Kommunikationseinrichtung 2 dazu verwendet, um über den IEEE 802.11p-Standard mit Verkehrsteilnehmern 9 und/oder Infrastruktureinrichtungen 8 zu kommunizieren. Damit wird es beispielsweise möglich, dass weitere Verkehrsteilnehmer 9 vor dem Nutzer 7 gewarnt werden. Ferner werden dem Nutzer 7 durch die mit der Vorrichtung 1 empfangenen Daten Informationen zur Verfügung gestellt, durch welche die Sicherheit im Straßenverkehr erhöht werden kann. Nachfolgend werden in den Fig. 3 und 4 beispielhaft zwei Situationen beschrieben, wie die Vorrichtung 1 im Straßenverkehr eingesetzt werden kann.

Fig. 3 zeigt eine erste beispielhafte Situation, bei welcher der Nutzer 7, vorliegend ein Fußgänger, die Vorrichtung 1 hält bzw. bedient. In der Umgebung des Nutzers 7 befindet sich eine Infrastruktureinrichtung 8. Bei der Infrastruktureinrichtung 8 handelt es sich vorliegend um eine Lichtsignalanlage bzw. um eine Ampel. Die Infrastruktureinrichtung 8 umfasst eine Anzeigeeinheit 10, mittels welcher die Lichtsignale der Ampel bereitgestellt werden können. Darüber hinaus umfasst die Infrastruktureinrichtung 8 eine weitere Kommunikationseinrichtung 11, mittels welcher Daten kabellos an die Kommunikationseinrichtung 2 der Vorrichtung 1 übertragen werden können. Auf Grundlage der empfangenen Daten kann dann mit der Ausgabeeinrichtung 6 eine entsprechende Anzeige bereitgestellt werden. Beispielsweise kann auf der Ausgabeeinrichtung 6 eine Anzeige bereitgestellt werden welche angibt, wie lange eine Rotphase der Ampel noch andauern wird.

Fig. 4 zeigt eine weitere Situation, bei welcher sich der Nutzer 7, der die Vorrichtung 1 hält bzw. bedient, in einer Umgebung eines weiteren Verkehrsteilnehmers 9 bzw. eines Fahrzeugs 12 befindet. Vorliegend können mit der Kommunikationseinrichtung 2 der Vorrichtung 1 Daten drahtlos an eine weitere Kommunikationseinrichtung 13 des Fahrzeugs 12 übertragen werden, welche die aktuelle Position der Vorrichtung 1 beschreiben. Auf diese Weise können einem Fahrer des Fahrzeugs 12 Informationen bereitgestellt werden, an welcher Stelle sich der Nutzer 7 mit der Vorrichtung 1 befindet. Wenn sich der Nutzer 7 beispielsweise auf einer Fahrbahn in Fahrtrichtung vor dem Fahrzeug 12 befindet, kann auf Grundlage der von der Vorrichtung 1 empfangenen Daten eine Warnung an den Fahrer des Fahrzeugs 12 ausgegeben werden. Somit kann beispielsweise eine mögliche Kollision zwischen dem Fahrzeug 1 und dem Nutzer 7 verhindert werden. Dies kann beispielsweise vorteilhaft genutzt werden, wenn es sich bei dem Nutzer 7 um ein Kind handelt, welches als die Vorrichtung 1 sein Smartphone mitführt, auf dem zum Durchführen des Verfahrens ein entsprechendes Computerprogramm zum Ablauf gebracht wird.

Durch die Vorrichtung 1, mittels welcher das Verfahren zur Datenübertragung durchgeführt wird, kann die Sicherheit und die Verkehrseffizienz im Straßenverkehr auch für Fußgänger, welche die Vorrichtung 1 mit sich führen, erhöht werden. In gleicher Weise kann die Vorrichtung 1 beispielsweise von einem Fahrradfahrer mitgeführt werden. Die Vorrichtung 1 kann auch auf einem motorisierten Fahrzeug mitgeführt werden. Auch hier lässt sich prinzipiell dieselbe Funktionalität mit der Vorrichtung 1 bereitstellen. Somit kann beispielsweise in Fahrzeugen, insbesondere Kraftfahrzeugen, welche selbst keine Kommunikationseinrichtung zum Datenaustausch gemäß dem Standard IEEE 802.11p aufweisen, die Möglichkeit geboten werden, an der Fahrzeug-zu-Fahrzeug-Kommunikation oder an der Fahrzeug-zu-Infrastruktur-Kommunikation zu partizipieren.

Die Kommunikationseinrichtung 2 nimmt in dem zweiten Betriebsmodus an einer ad-hoc-Kommunikation teil. Diese ad-hoc-Kommunikation erfolgt über den IEEE 802.11p-Standard mit Verkehrsteilnehmern 9 und/oder Infrastruktureinrichtungen 8. Zwischen der Kommunikationseinrichtung 2 sowie zumindest einem weiteren Verkehrsteilnehmer 9 und/oder zumindest einer Infrastruktureinrichtung 8 wird also ein ad-hoc-Netzwerk aufgebaut. Bei einem ad-hoc-Netzwerk handelt es sich um ein geschlossenes Netzwerk, welches sich selbst organisieren kann und keine Hierarchie aufweist. Dieses ad-hoc-Netzwerk baut sich insbesondere nur für die Dauer der Kommunikation auf. Ferner kann das ad-hoc-Netzwerk keine festgelegte Kommunikationsstruktur aufweisen. Bevorzugt werden die Kommunikationspartner, die sich dem ad-hoc-Netzwerk anschließen, dynamisch in das Kommunikationsnetz integriert. Durch die ad-hoc-Kommunikation können die sicherheitsrelevanten Daten zwischen der Kommunikationseinrichtung 2 einerseits und den Verkehrsteilnehmern 9 und/oder den Infrastruktureinrichtungen 8 andererseits innerhalb einer kurzen Zeit übertagen werden, wodurch die Sicherheit erhöht werden kann.

## Patentansprüche

1. Verfahren zur Datenübertragung, bei welchem mittels einer Kommunikationseinrichtung (2) in einem ersten Betriebsmodus Daten in einem nach einem ersten Standard ausgebildeten, ersten Funknetz ausgesendet und/oder empfangen werden und in einem zweiten Betriebsmodus Daten in einem nach einem zweiten Standard ausgebildeten, zweiten Funknetz ausgesendet und/oder empfangen werden, wobei mittels der Kommunikationseinrichtung (2) erkannt wird, ob sich die Kommunikationseinrichtung (2) innerhalb oder außerhalb eines Empfangsbereichs des ersten Funknetzes befindet, wobei die Kommunikationseinrichtung (2) in dem ersten Betriebsmodus betrieben wird, falls sich die Kommunikationseinrichtung (2) innerhalb des Empfangsbereichs des ersten Funknetzes befindet (S3), und die Kommunikationseinrichtung (2) in dem zweiten Betriebsmodus betrieben wird, falls sich die Kommunikationseinrichtung (2) außerhalb des Empfangsbereichs des ersten Funknetzes befindet (S4), wobei der zweite Standard ein IEEE 802.11p-Standard ist und der erste Standard ein von dem IEEE 802.11p-Standard verschiedener Standard der Norm IEEE 802.11 ist, und die Kommunikationseinrichtung (2) in dem zweiten Betriebsmodus an einer ad-hoc-Kommunikation teilnimmt,
**dadurch gekennzeichnet, dass**
in dem zweiten Betriebsmodus die Daten von der Kommunikationseinrichtung (2) an eine weitere Kommunikationseinrichtung (13) eines Verkehrsteilnehmers (9) und/oder an eine weitere Kommunikationseinrichtung (11) einer Infrastruktureinrichtung (8) gesendet werden, wobei mittels der Kommunikationseinrichtung (2) Daten, welche eine aktuelle Position der Kommunikationseinrichtung (2) und/oder eine aktuelle Bewegung der Kommunikationseinrichtung (2) und/oder einen aktuellen Zeitpunkt beschreiben, an die weitere Kommunikationseinrichtung (13) des Verkehrsteilnehmers (9) und/oder die weitere Kommunikationseinrichtung (11) der Infrastruktureinrichtung (8) gesendet werden und/oder
dass in dem zweiten Betriebsmodus die Daten mittels der Kommunikationseinrichtung (2) von der weiteren Kommunikationseinrichtung (13) des Verkehrseilnehmers (9) und/oder der weiteren Kommunikationseinrichtung (11) der Infrastruktureinrichtung (8) empfangen werden, wobei von der weiteren Kommunikationseinrichtung (13) des Verkehrsteilnehmers (9) ausgesendete Daten, welche einen Betriebszustand des Verkehrsteilnehmers (9) beschreiben, und/oder von der weiteren Kommunikationseinrichtung (11) der Infrastruktureinrichtung (8) ausgesendete Daten, welche einen Betriebszustand der Infrastruktureinrichtung (8) beschreiben, mittels der Kommunikationseinrichtung (2) empfangen werden, wobei in Abhängigkeit von den in dem zweiten Betriebsmodus empfangenen Daten eine Ausgabe und/oder Warnung ausgeben wird.

2. Verfahren nach Anspruch 1,
**dadurch gekennzeichnet, dass**
falls sich die Kommunikationseinrichtung (2) in dem Empfangsbereich des ersten Funknetzes befindet, eine Position der Kommunikationseinrichtung (2) bestimmt wird und die bestimmte Position in einer Speichereinrichtung (5) gespeichert wird.

3. Verfahren nach Anspruch 2,
**dadurch gekennzeichnet, dass**
eine aktuelle Position der Kommunikationseinrichtung (2) mit in der Speichereinrichtung (5) gespeicherten Positionen verglichen wird und die Kommunikationseinrichtung (2) in dem zweiten Betriebsmodus betrieben wird, falls sich die aktuelle Position von den gespeicherten Positionen unterscheidet.

4. Vorrichtung (1) zur Datenübertragung, insbesondere mobiles Endgerät, mit einer Kommunikationseinrichtung (2), welche dazu ausgelegt ist, in einem ersten Betriebsmodus Daten in einem nach einem ersten Standard ausgebildeten, ersten Funknetz zu senden und/oder zu empfangen und in einem zweiten Betriebsmodus Daten in einem nach einem zweiten Standard ausgebildeten, zweiten Funknetz zu senden und/oder zu empfangen, wobei die Vorrichtung (1) dazu ausgelegt ist, zu erkennen, ob sich die Kommunikationseinrichtung (2) innerhalb oder außerhalb eines Empfangsbereichs des ersten Funknetzes befindet, und mit einer Recheneinrichtung (3) zum Einstellen des Betriebsmodus der Kommunikationseinrichtung (2), wobei die Recheneinrichtung (3) dazu ausgelegt ist, die Kommunikationseinrichtung (2) in dem ersten Betriebsmodus zu betreiben, falls sich die Kommunikationseinrichtung (2) innerhalb des Empfangsbereichs des ersten Funknetzes befindet, und die Kommunikationseinrichtung (2) in dem zweiten Betriebsmodus zu betreiben, falls sich die Kommunikationseinrichtung (2) außerhalb des Empfangsbereichs des ersten Funknetzes befindet,
wobei der zweite Standard ein IEEE 802.11p-Standard ist und der erste Standard ein von dem IEEE 802.11p-Standard verschiedener Standard der Norm IEEE 802.11 ist, und die Kommunikationseinrichtung (2) dazu ausgelegt ist, in dem zweiten Betriebsmodus an einer ad-hoc-Kommunikation teilzunehmen,
**dadurch gekennzeichnet, dass**
die Kommunikationseinrichtung (2) dazu ausgebildet ist, in dem zweiten Betriebsmodus die Daten an eine weitere Kommunikationseinrichtung (13) eines Verkehrsteilnehmers (9) und/oder an eine weitere Kommunikationseinrichtung (11) einer Infrastruktureinrichtung (8) zu senden, wobei die Kommunikationseinrichtung (2) dazu ausgebildet ist, Daten, welche eine aktuelle Position der Kommunikationseinrichtung (2) und/oder eine aktuelle Bewegung der Kommunikationseinrichtung (2) und/oder einen aktuellen Zeitpunkt beschreiben, an die weitere Kommunikationseinrichtung (13) des Verkehrsteilnehmers (9) und/oder die weitere Kommunikationseinrichtung (11) der Infrastruktureinrichtung (8) zu senden und/oder
dass die Kommunikationseinrichtung (2) dazu ausgebildet ist, in dem zweiten Betriebsmodus die Daten von der weiteren Kommunikationseinrichtung (13) des Verkehrseilnehmers (9) und/oder der weiteren Kommunikationseinrichtung (11) der Infrastruktureinrichtung (8) zu empfangen, wobei die Kommunikationseinrichtung (2) dazu ausgebildet ist, von der weiteren Kommunikationseinrichtung (13) des Verkehrsteilnehmers (9) ausgesendete Daten, welche einen Betriebszustand des Verkehrsteilnehmers (9) beschreiben, und/oder von der weiteren Kommunikationseinrichtung (11) der Infrastruktureinrichtung (8) ausgesendete Daten, welche einen Betriebszustand der Infrastruktureinrichtung (8) beschreiben, zu empfangen,
wobei die Vorrichtung (1) dazu ausgebildet ist, in Abhängigkeit von den in dem zweiten Betriebsmodus empfangenen Daten eine Ausgabe und/oder Warnung auszugeben.

5. Computerprogramm, welches zum Ausführen eines Verfahrens nach einem der Ansprüche 1 bis 3 programmiert ist, wenn es auf einer Recheneinrichtung (3) einer Vorrichtung (1) ausgeführt wird.

6. Speichereinrichtung (5) für eine Vorrichtung (1), wobei auf der Speichereinrichtung (5) ein Computerprogramm gemäß Anspruch 5 abgelegt ist.

## Claims

1. Method for data transmission, wherein by means of a communication device (2) data are sent and/or received in a first operating mode in a first radio network designed in accordance with a first standard and sent and/or received in a second operating mode in a second radio network designed in accordance with a second standard, wherein it is detected by means of the communication device (2) whether the communication device (2) is inside or outside a reception range of the first radio network, wherein the communication device (2) is operated in the first operating mode if the communication device (2) is within the reception range of the first radio network (S3) and the communication device (2) is operated in the second operating mode if the communication device (2) is outside the reception range of the first radio network (S4), wherein the second standard is an IEEE 802.11p standard and the first standard is an IEEE 802.11 standard different from the IEEE 802.11p standard and the communication device (2) participates in an ad-hoc communication in the second operating mode,
**characterised in that**
in the second operating mode the data are sent by the communication device (2) to a further communication device (13) of a road user (9) and/or to a further communication device (11) of an infrastructure device (8), wherein, by means of the communication device (2), data which describe a current position of the communication device (2) and/or a current movement of the communication device (2) and/or a current point in time are sent to the further communication device (13) of the road user (9) and/or to the further communication device (11) of the infrastructure device (8), and/or
**in that** in the second operating mode the data are received by means of the communication device (2) from the further communication device (13) of the road user (9) and/or from the further communication device (11) of the infrastructure device (8), wherein data sent by the further communication device (13) of the road user (9) describing an operating state of the road user (9) and/or data sent by the further communication device (11) of the infrastructure device (8) describing an operating state of the infrastructure device (8) are received by means of the communication device (2), wherein a readout and/or warning is output as a function of the data received in the second operating mode.

2. Method according to claim 1,
**characterised in that**
if the communication device (2) is in the reception range of the first radio network, a position of the communication device (2) is defined and the defined position is stored in a storage device (5).

3. Method according to claim 2,
**characterised in that**
a current position of the communication device (2) is compared to the positions stored in the storage device (5) and the communication device (2) is operated in the second operating mode if the current position differs from the stored positions.

4. Device (1) for data transmission, in particular mobile terminal device, with a communication device (2) designed to send and/or receive data in a first operating mode in a first radio network designed in accordance with a first standard and to send and/or receive data in a second operating mode in a second radio network designed in accordance with a second standard, wherein the device (1) is designed to detect whether the communication device (2) is within or outside a reception range of the first radio network, and with a calculating device (3) for setting the operating mode of the communication device (2), wherein the calculating device (3) is designed to operate the communication device (2) in the first operating mode if the communication device (2) is within the reception range of the first radio network and to operate the communication device (2) in the second operating mode if the communication device (2) is outside the reception range of the first radio network, wherein the second standard is an IEEE 802.11p standard and the first standard is an IEEE 802.11 standard different from the IEEE 802.11p standard and the communication device (2) is designed to participate in an ad-hoc communication in the second operating mode,
**characterised in that**
the communication device (2) is designed to send the data in the second operating mode to a further communication device (13) of a road user (9) and/or to a further communication device (11) of an infrastructure device (8), wherein the communication device (2) is designed to send data which describe a current position of the communication device (2) and/or a current movement of the communication device (2) and/or a current point in time to the further communication device (13) of the road user (9) and/or to the further communication device (11) of the infrastructure device (8), and/or
**in that** the communication device (2) is designed to receive in the second operating mode data from the further communication device (13) of the road user (9) and/or from the further communication device (11) of the infrastructure device (8), wherein the communication device (2) is designed to receive data sent by the further communication device (13) of the road user (9) describing an operating state of the road user (9) and/or data sent by the further communication device (11) of the infrastructure device (8) describing an operating state of the infrastructure device (8),
wherein the communication device (2) is designed to output a readout and/or warning as a function of the data received in the second operating mode.

5. Computer programme programmed to execute a method according to any of claims 1 to 3 if executed on a calculating device (3) of a device (1).

6. Storage device (5) for a device (1), wherein a computer programme according to claim 5 is stored on the storage device (5).

## Revendications

1. Procédé de transmission de données selon lequel au moyen d'un dispositif de communication (2) dans un premier mode de fonctionnement, des données sont envoyées et/ou reçues dans un premier réseau radio conçu selon une première norme, et dans un second mode de fonctionnement, des données sont envoyées et/ou reçues dans un second réseau radio conçu selon une seconde norme, le dispositif de communication (2) permettant de reconnaître si le dispositif de communication (2) se trouve à l'intérieur ou à l'extérieur d'une zone de réception du premier réseau radio, le dispositif de communication (2) fonctionnant dans le premier mode de fonctionnement, dans le cas où le dispositif de communication (2) se trouve à l'intérieur de la zone de réception du premier réseau radio (S3),et que le dispositif de communication (2) fonctionne dans le second mode de fonctionnement, dans le cas où le dispositif de communication (2) se trouve à l'extérieur de la zone de réception du premier réseau radio (S4), la seconde norme est une norme IEE 802 11p et la première norme est une norme différente d'une norme différente de la IEEE 802 11p et la première norme est une norme du standard IEEE 802 11 différente de la norme IEEE 802 11p, et le dispositif de communication (2) dans le second mode de fonctionnement participant à une communication ad-hoc, **caractérisé en ce que** dans le second mode de fonctionnement, les données sont envoyées par le dispositif de communication (2) à un autre dispositif de communication (13) d'un usager de la route (9) et/ou à un autre dispositif de communication (11) d'un dispositif d'infrastructure (8), au moyen du dispositif de communication (2) les données, qui décrivent une position réelle du dispositif de communication (2) et/ou un déplacement réel du dispositif de communication (2) et/ou un moment réel, étant envoyées à l'autre dispositif de communication (13) de l'usager de la route (9) et/ou à l'autre dispositif de communication (11) du dispositif d'infrastructure (8) et/ou **en ce que** dans le second mode de fonctionnement, les données sont reçues au moyen du dispositif de communication (2) par l'autre dispositif de communication (13) de l'usager de la route (9) et/ou par l'autre dispositif de communication (11) du dispositif d'infrastructure (8), les données envoyées par l'autre dispositif de communication (13) de l'usager de la route (9), qui décrivent un état de fonctionnement de l'usager de la route (9), et/ou les données envoyées par l'autre dispositif de communication (11) du dispositif d'infrastructure (8) qui décrivent un état de fonctionnement du dispositif d'infrastructure (8), étant reçues au moyen du dispositif de communication (2), en fonction des données reçues dans le second mode de fonctionnement, une sortie et/ou un avertissement étant délivré(e).

2. Procédé selon la revendication 1, **caractérisé en ce que** dans le cas où le dispositif de communication (2) se trouve dans la zone de réception du premier réseau radio, une position du dispositif de communication (2) est déterminée et la position déterminée est enregistrée dans une mémoire (5).

3. Procédé selon la revendication 2, **caractérisé en ce qu'**une position réelle du dispositif de communication (2) est comparée à des positions enregistrées dans la mémoire (5) et le dispositif de communication (2) fonctionne dans le second mode dans le cas où la position actuelle se différencie des positions enregistrées.

4. Dispositif (1) pour le transfert de données, en particulier d'un terminal mobile, à l'aide d'un dispositif de communication, qui est conçu pour envoyer et/ou recevoir dans un premier mode de fonctionnement des données dans un premier réseau radio conçu selon une première norme et dans un second mode de fonctionnement pour envoyer et/ou recevoir des données dans un second réseau radio conçu selon une seconde norme, le dispositif (1) étant conçu pour reconnaître si le dispositif de communication (2) se trouve à l'intérieur ou à l'extérieur d'une zone de réception du premier réseau radio, et à l'aide d'un dispositif informatique (3) pour régler le mode de fonctionnement du dispositif de communication (2), le dispositif informatique (3) étant conçu pour faire fonctionner le dispositif de communication (2) dans le premier mode de fonctionnement, dans le cas où le dispositif de communication (2) se trouve à l'intérieur de la zone de réception du premier réseau radio, et de faire fonctionner le dispositif de communication (2) dans le second mode de fonctionnement dans le cas où le dispositif de communication (2) se trouve à l'extérieur de la zone de réception du premier réseau radio, la seconde norme est une norme IEEE 802 11p et la première norme est une norme du standard IEEE 802 11 différente de la norme IEEE 802 11p, et le dispositif de communication (2) étant conçu pour participer dans le second mode de fonctionnement à une communication ad-hoc, **caractérisé en ce que** le dispositif de communication (2) est conçu pour envoyer dans le second mode de fonctionnement les données à un autre dispositif de communication (13) d'un usager de la route (9) et/ou à un autre dispositif de communication (11) d'un dispositif d'infrastructure (8), le dispositif de communication (2) étant conçu pour envoyer les données qui décrivent une position actuelle du dispositif de communication (2) et/ou un déplacement réel du dispositif de communication (2) et/ou un moment réel, à l'autre dispositif de communication (13) de l'usager de la route (9) et/ou à l'autre dispositif de communication (11) du dispositif d'infrastructure (8) et/ou, **en ce que** le dispositif de communication (2) est conçu pour recevoir dans le second mode de fonctionnement les données en provenance de l'autre dispositif de communication (13) de l'usager de la route (9) et/ou de l'autre dispositif de communication (11) du dispositif d'infrastructure (8), le dispositif de communication (2) étant conçu pour recevoir les données envoyées par l'autre dispositif de communication (13) de l'usager de la route (9) qui décrivent un état de fonctionnement de l'usager de la route (9), et/ou les données envoyées par l'autre dispositif de communication (11) du dispositif d'infrastructure (8) qui décrivent un état de fonctionnement du dispositif d'infrastructure (8), le dispositif (1) étant conçu pour délivrer une sortie et/ou un avertissement en fonction des données reçues dans le second mode de fonctionnement.

5. Programme informatique qui est programmé pour exécuter un procédé selon l'une quelconque des revendications 1 à 3, lorsqu'il est exécuté sur un dispositif informatique (3) d'un dispositif (1).

6. Mémoire (5) pour un dispositif (1), un programme informatique étant enregistré dans la mémoire (5) selon la revendication 5.
